# FASCICULE DE BREVET EUROPEEN

(11) **EP 0 855 435 B1**
(45) Date de publication et mention de la délivrance du brevet: **24.04.2002**
(21) Numéro de dépôt: 98400100.8
(22) Date de dépôt: 20.01.1998
(51) Int. Cl.: C10G 11/05, B01J 29/70

(54) **Procédé de craquage de charges hydrocarbonées à l'aide d'un catalyseur comprenant une zéolithe IM-5 éventuellement désaluminée**
Katalytisches Krackverfahren von Kohlenwasserstoffeinsätzen mit einem Katalysator, der einen IM-5 Zeolit enthäle, der eventuel entaluminiert kann sein
Process for the catalytic cracking of hydrocarbon feeds with a catalyst containing zeoilite IM-5, possibly dealuminated

(30) Priorité: 24.01.1997 FR 9700864
(43) Date de publication de la demande: 29.07.1998
(73) Titulaire: INSTITUT FRANCAIS DU PETROLE, 92500 Rueil Malmaison (FR)
(72) Inventeur: Benazzi, Eric, 78400 Chatou (FR); Cauffriez, Hervé, 78380 Bougival (FR)

(56) Documents cités:
- EP-A- 0 142 313
- EP-A- 0 463 768
- EP-A- 0 825 152
- EP-A- 0 855 218
- WO-A-98/17581

## Description

L'invention concerne l'utilisation dans un procédé de craquage catalytique de charges pétrolières d'un catalyseur comprenant une zéolithe Y de structure faujasite associée à une zéolithe IM-5 éventuellement désaluminée et au moins en partie sous forme acide et à une matrice habituellement amorphe ou mal cristallisée. Un tel procédé, qui est particulièrement bien adapté au craquage de fractions pétrolières lourdes, permet de craquer des fractions pétrolières en vue de produire une quantité importante de composés ayant 3 et/ou 4 atomes de carbone par molécule et plus particulièrement du propylène et de l'isobutane.

Le craquage des charges hydrocarbonées, permettant d'obtenir des rendements élevés en essence pour automobile de très bonne qualité, s'est imposé dans l'industrie pétrolière dès la fin des années 1930. L'introduction des procédés fonctionnant en lit fluide (FCC ou Fluid Catalytic Cracking) ou en lit mobile (tel le TCC) dans lesquels le catalyseur circule en permanence entre la zone réactionnelle et le régénérateur où il est débarrassé du coke par combustion en présence d'un gaz contenant de l'oxygène a introduit un progrès important par rapport à la technique du lit fixe. Les unités à lit fluide (FCC) sont maintenant beaucoup plus répandues que celles à lit mobile. Le craquage est habituellement réalisé vers 500°C, sous une pression totale voisine de la pression atmosphérique et en l'absence d'hydrogène.

L'art antérieur est illustré par exemple par le brevet EP-A-142 313.
Les catalyseurs les plus utilisés dans les unités de craquage sont depuis le début des années 1960 des zéolithes habituellement de structure faujasite. Ces zéolithes, incorporées dans une matrice amorphe, par exemple constituée de silice-alumine amorphe, et pouvant contenir des proportions variables d'argiles, sont caractérisées par des activités craquantes, vis-à-vis des hydrocarbures, 1.000 à 10.000 fois supérieures à celles des catalyseurs silice-alumine riches en silice utilisés jusque vers la fin des années 1950.

Vers la fin des années 1970, le manque de disponibilité en pétrole brut et la demande croissante en essence à haut indice d'octane ont conduit les raffineurs à traiter des bruts de plus en plus lourds. Le traitement de ces derniers constitue un problème difficile pour le raffineur en raison de leur teneur élevée en poisons des catalyseurs, notamment en composés métalliques (en particulier nickel et vanadium), des valeurs inhabituelles en carbone Conradson et surtout en composés asphalténiques.

Cette nécessité de traiter des charges lourdes et d'autres problèmes plus récents, tels que la suppression progressive mais générale dans l'essence des additifs à base de plomb, l'évolution lente mais sensible dans certains pays de la demande en distillats moyens (kérosènes et gazoles), ont de plus incité les raffineurs à recherche des catalyseurs améliorés permettant d'atteindre notamment les objectif suivants :
- catalyseurs plus stables thermiquement et hydrothermiquement et plus tolérants aux métaux,
- produire moins de coke à conversion identique,
- obtenir une essence d'indice d'octane plus élevé,
- sélectivité améliorée en distillats moyens.

Dans la majorité des cas, on cherche à minimiser le production de gaz légers, comprenant des composés ayant de 1 à 4 atomes de carbone par molécule, et, par conséquent, les catalyseurs sont conçus pour limiter la production de tels gaz légers.

Cependant il apparaît dans certains cas particuliers une demande importante en hydrocarbures légers de 2 à 4 atomes de carbone par molécule ou en certains d'entre eux, tel que les hydrocarbures en C3 et/ou C4 et plus particulièrement le propylène et les butènes.

L'obtention d'une quantité importante de butènes est en particulier intéressante dans le cas où le raffineur dispose d'une unité d'alkylation, par exemple des coupes C3-C4 contenant des oléfines, en vue de former une quantité supplémentaire d'essence à haut indice d'octane. Ainsi le rendement global en essence de bonne qualité obtenue à partir des coupes d'hydrocarbures de départ est sensiblement augmenté.

L'obtention de propylène est particulièrement souhaitée dans certains pays en voie de développement, où apparaît une demande importante en ce produit.

Le procédé de craquage catalytique peut satisfaire dans une certaine mesure de telles demandes à condition en particulier d'adapter le catalyseur en vue de cette production. Une manière efficace d'adapter le catalyseur consiste à ajouter aux masses catalytiques un agent actif présentant les deux qualités suivantes:
1. craquer les molécules lourdes avec une bonne sélectivité en hydrocarbures à 3 et/ou 4 atomes de carbone, notamment en propylène et en butènes ;
2. être suffisamment résistant aux conditions sévères de pression partielle de vapeur d'eau et de température qui règnent dans le régénérateur d'un craqueur industriel.

Les travaux de recherche effectués par le demandeur sur de nombreuses zéolithes l'ont conduit à découvrir que, de façon surprenante, une zéolithe IM-5 désaluminée ou non et au moins en partie sous forme acide, permet d'obtenir un catalyseur ayant une excellente stabilité et possédant une bonne sélectivité vis-à-vis d'une production d'hydrocarbures à 3 et/ou 4 atomes de carbone par molécule.

La zéolithe IM-5 forme hydrogène selon la présente invention, possède une structure qui n'a pas encore été élucidée. Elle est décrite dans la demande de brevet WO 9817581A dont une description partielle est incorporée ici à titre de référence.

La nouvelle structure zéolithique, nommée IM-5, a la composition chimique, exprimée sur une base anhydre, en termes de rapports molaires d'oxydes, par la formule suivante :

100 XO₂, m Y₂O₃, p R_{2/n}O,

où m est égal ou inférieur à 10,
p est égal ou inférieur à 20,
R représente un ou plusieurs cations de valence n,
X est le silicium et/ou le germanium, de préférence le silicium,
Y est choisi dans le groupe formé par les éléments suivants : l'aluminium, le fer, le gallium, le bore, le titane, de préférence Y est l'aluminium,
et elle est caractérisée par le fait qu'elle présente, sous forme brute de synthèse, un diagramme de diffraction X comportant les raies présentées dans le tableau 1.

La zéolithe IM-5 dans sa forme hydrogène, désignée H-IM-5, est obtenue par calcination(s) et/ou échange(s) ionique(s) comme explicité ci-après. La zéolithe H-IM-5 présente un diagramme de diffraction des rayons X comportant les raies présentées dans le tableau 2.

**Tableau 1 :**

| Tableau de diffraction des rayons X de la zéolithe IM-5 brute de synthèse | |
|---|---|
| dₕₖₗ (Å) | l/lₘₐₓ |
| 11,8±0,35 | F à TF(1) |
| 11,5±0,30 | F à TF(1) |
| 11,25±0,30 | Fà TF(1) |
| 9,95±0,20 | m à F |
| 9,50±0,15 | m à F |
| 7,08±0,12 | f à m |
| 6,04±0,10 | tf à f |
| 5,75±0,10 | f |
| 5,65±0,10 | f |
| 5,50±0,10 | tf |
| 5,35±0,10 | tf |
| 5,03±0,09 | tf |
| 4,72±0,08 | f à m |
| 4,55±0,07 | f |
| 4,26±0,07 | tf |
| 3,92±0,07 | F à TF (2) |
| 3,94±0,07 | TF (2) |
| 3,85±0,05 | TF (2) |
| 3,78±0,04 | F à TF (2) |
| 3,67±0,04 | m à F |
| 3,55±0,03 | m à F |
| 3,37±0,02 | f |
| 3,30±0,015 | f |
| 3,099±0,012 | f à m |
| 2,970±0,007 | tf à f |
| 2,815±0,005 | tf |
| 2,720±0,005 | tf |

| | |
|---|---|
| (1) Raies faisant partie du même massif, | |
| (2) Raies faisant partie du même massif. | |

**Tableau 2 :**

| Tableau de diffraction des rayons X de la zéolithe IM-5 sous forme H, H-IM-5, obtenue par calcination | |
|---|---|
| dₕₖₗ (Å) | l/lₘₐₓ |
| 11,8±0,30 | F à TF(1) |
| 11,45±0,25 | TF(1) |
| 11,20±0,20 | F à TF(1) |
| 9,90±0,15 | m à F |
| 9,50±0,15 | m à F |
| 7,06±0,12 | f à m |
| 6,01±0,10 | tf à f |
| 5,70±0,10 | f |
| 5,30±0,10 | tf |
| 5,03±0,09 | tf |
| 4,71±0,08 | f |
| 4,25±0,07 | tf |
| 3,87±0,07 | m à F (2) |
| 3,81±0,05 | m à F (2) |
| 3,76±0,04 | m à F (2) |
| 3,67±0,04 | f à m |
| 3,54±0,04 | m à F |
| 3,37±0,03 | f |
| 3,316±0,015 | f |
| 3,103±0,012 | f |
| 3,080±0,010 | f à m |
| 2,950±0,010 | tf à f |
| 2,880±0,007 | tf |
| 2,790±0,005 | tf |
| 2,590±0,005 | tf |

| | |
|---|---|
| (1) Raies faisant partie du même massif, | |
| (2) Raies faisant partie du même massif. | |

Ces diagrammes sont obtenus à l'aide d'un diffractomètre en utilisant la méthode classique des poudres avec le rayonnement Ka du cuivre. A partir de la position des pics de diffraction représentée par l'angle 2θ, on calcule, par la relation de Bragg, les équidistances réticulaires dhkl caractéristiques de l'échantillon. Le calcul de l'intensité se fait sur la base d'une échelle d'intensité relative sur laquelle on attribue une valeur de 100 à la raie présentant l'intensité la plus forte sur le diagramme de diffraction X :
très faible (tf) signifie inférieure à 10,
faible (f) signifie inférieure à 20,
moyenne (m) signifie comprise entre 20 et 40,
forte (F) signifie comprise entre 40 et 60,
très forte (TF) signifie supérieure à 60.

Les diffractogrammes X à partir desquels ces données ont été obtenues (espacement d et intensités relatives) sont caractérisés par de larges réflexions avec de nombreux pics formant des épaulements sur d'autres pics d'intensité supérieure. Il peut arriver que certains épaulements, ou tous les épaulements, ne soient pas résolus. Ceci peut se produire pour des échantillons faiblement cristallins ou des échantillons au sein desquels les cristaux sont suffisamment petits pour donner un élargissement significatif des rayons X. Cela peut également être le cas lorsque l'équipement ou les conditions mis en oeuvre pour obtenir le diagramme diffèrent de ceux utilisés ici.

Dans le cadre de la définition de la compositon chimique donnée ci-dessus, m est généralement compris entre 0,1 et 10, de préférence entre 0,3 et 9, et de façon encore plus préférée entre 0,5 et 8 ; il apparaît que la zéolithe IM-5 s'obtient généralement le plus aisément sous une forme très pure lorsque m est compris entre 0,8 et 8.

On estime que la zéolithe IM-5 possède une nouvelle structure de base ou topologie qui est caractérisée par son diagramme de diffraction X. La zéolithe IM-5 sous sa "forme brute de synthèse" possède sensiblement les caractéristiques obtenues par diffraction X, présentées dans le tableau 1 (voir aussi un exemple de diffractogramme en figure 1), et se distingue ainsi des zéolithes connues. De même la zéolithe H-IM-5, obtenue par calcination et/ou échanges ioniques, possède sensiblement les caractéristiques présentées dans le tableau 2 (voir aussi un exemple de diffractogramme en figure 2). L'invention décrite dans la demande de brevet français 96/12.873 du 21/10/96 comprend aussi toute zéolithe de même type structural que celui de la zéolithe IM-5.

Par ailleurs, certaines applications catalytiques nécessitent un ajustement de la stabilité thermique et de l'acidité de la zéolithe à la réaction envisagée. Un des moyens pour optimiser l'acidité d'une zéolithe est de diminuer la quantité d'aluminium présent dans sa charpente. Le rapport Si/AI de la charpente peut être réglé à la synthèse ou bien après la synthèse. Dans ce dernier cas, l'opération dite de désalumination, doit être effectuée en détruisant le moins possible la structure cristalline de la zéolithe.

Il est connu de l'homme du métier qu'une désalumination de la charpente de la zéolithe conduit à un solide thermiquement plus stable. Cependant, les traitements de désalumination que subissent les zéolithes conduisent à la formation d'espèces aluminiques extra-charpente qui peuvent obstruer la microporosité de la zéolithe si ces dernières ne sont pas éliminées. C'est par exemple le cas des zéolithes utilisées comme additifs au catalyseur de craquage catalytique dans les unités FCC, pour la production des oléfines. En effet, dans le régénérateur de l'unité de craquage régnent de hautes températures, supérieures à 600°C, et une pression de vapeur d'eau non négligeable qui vont conduire à une désalumination de la charpente des zéolithes et par conséquent à une perte de sites acides et au bouchage de la microporosité. Ces deux phénomènes concourrent à une diminution de l'activité donc de l'efficacité de l'additif zéolithique.

Une désalumination contrôlée et réalisée hors unité permet de régler exactement le taux de désalumination de la charpente de la zéolithe et permet aussi d'éliminer les espèces aluminiques extra-charpente qui obstruent la microporosité contrairement à ce qui se passe dans l'unité de craquage, comme il a été expliqué dans le paragraphe précédent. L'étape de désalumination post-synthèse peut être réalisée par toute technique connue de l'homme du métier ; on peut citer à titre d'exemples non limitatifs tout traitement thermique, éventuellement en présence de vapeur d'eau, suivi d'au moins une attaque acide par au moins une solution d'un acide minéral ou organique, ou bien tout désalumination par au moins une attaque acide par au moins une solution d'un acide minéral ou organique.

La présente invention concerne donc un procédé de craquage catalytique de charges hydrocarbonées caractérisé par l'utilisation d'un catalyseur de craquage comprenant au moins une zéolithe IM-5 et une zéolithe Y de structure faujasite. La zéolithe IM-5 est au moins en partie , de préférence pratiquement totalement, sous forme acide et éventuellement désaluminée.

Lorsqu'elle a été désaluminée, ladite zéolithe a généralement été désaluminée par au moins un traitement thermique, éventuellement en présence de vapeur d'eau, suivi d'au moins une attaque acide par au moins une solution d'un acide minéral ou organique, ou bien par au moins une attaque acide par au moins une solution d'un acide minéral ou organique.

La zéolithe IM-5 comprise dans le catalyseur utilisé dans le procédé de craquage selon l'invention, lorsqu'elle a été désaluminée, comprend du silicium et au moins un élément T choisi dans le groupe formé par l'aluminium, le fer, le gallium, et le bore, de préférence l'aluminium. Elle possède un rapport Si/T atomique global supérieur à 5, de préférence supérieur à 10, de manière plus préférée supérieur à 15, et de manière encore plus préférée compris entre 20 et 400.

La matrice est choisie généralement parmi les éléments du groupe formé par les argiles (par exemple parmi les argiles naturelles telles que le kaolin ou la bentonite), la magnésie, les alumines, les silices, l'oxyde de titane, l'oxyde de bore, la zircone, les phosphates d'aluminium, les phosphates de titane, les phosphates de zirconium, les silice-alumines et le charbon, de préférence parmi les éléments du groupe formé par les alumines et les argiles.

Lorsqu'elle est comprise dans le catalyseur utilisé dans le procédé selon l'invention, la zéolithe IM-5 est au moins en partie, de préférence pratiquement totalement, sous forme acide, c'est-à-dire sous forme hydrogène (H⁺). Le rapport atomique Na/T est généralement inférieur à 0,45 et de préférence inférieur à 0,30 et de manière encore plus préférée inférieur à 0,15.

Le rapport T/AI global de la zéolithe ainsi que la composition chimique des échantillons sont déterminés par fluorescence X et absorption atomique

II est aussi possible d'estimer le volume microporeux à partir de la quantité d'azote adsorbée à 77 K pour une pression partielle P/Po égale à 0,19, à titre indicatif.

Pour préparer la zéolithe IM-5 désaluminée, dans le cas préféré où T est Al, au moins deux méthodes de désalumination peuvent être employées, à partir de la zéolithe IM-5 brute de synthèse comprenant du structurant organique. Elles sont décrites ci-après. Mais toute autre méthode connue de l'homme du métier entre aussi dans le cadre de l'invention.

La première méthode dite de l'attaque acide directe comprend une première étape de calcination sous flux d'air sec, à une température généralement comprise entre environ 450 et 550°C, qui a pour but d'éliminer le structurant organique présent dans la microporosité de la zéolithe, suivie d'une étape de traitement par une solution aqueuse d'un acide minéral tel que HNO₃ ou HCI ou organique tel que CH₃CO₂H. Cette dernière étape peut être répétée autant de fois qu'il est nécessaire afin d'obtenir le niveau de désalumination voulu. Entre ces deux étapes il est possible de réaliser un ou plusieurs échanges ioniques par au moins une solution NH₄NO₃, de manière à éliminer au moins en partie, de préférence pratiquement totalement, le cation alcalin, en particulier le sodium. De même, à la fin du traitement de désalumination par attaque acide directe, il est éventuellement possible de réaliser un ou plusieurs échanges ioniques par au moins une solution NH₄NO₃, de manière à éliminer les cations alcalins résiduels et en particulier le sodium.

Pour atteindre le rapport Si/AI désiré, il est nécessaire de bien choisir les conditions opératoires ; de ce point de vue les paramètres les plus critiques sont la température de traitement par la solution aqueuse d'acide, la concentration dudit acide, la nature dudit acide, le rapport entre la quantité de solution acide et la masse de zéolithe traitée, la durée de traitement et le nombre de traitement réalisés.

La deuxième méthode dite de traitement thermique (en particulier à la vapeur d'eau ou "steaming") + attaque acide, comprend, dans un premier temps, la calcination sous flux d'air sec, à une température généralement comprise entre environ 450 et 550°C, qui a pour but d'éliminer le structurant organique occlus dans la microporosité de la zéolithe. Puis le solide ainsi obtenu est soumis à un ou plusieurs échanges ioniques par au moins une solution NH₄NO₃, de manière à éliminer au moins en partie, de préférence pratiquement totalement, le cation alcalin, en particulier le sodium, présent en position cationique dans la zéolithe. La zéolithe ainsi obtenue est soumise à au moins un cycle de désalumination de charpente, comportant au moins un traitement thermique réalisé, éventuellement et de préférence en présence de vapeur d'eau, à une température généralement comprise entre 550 et 900°C, et éventuellement suivie d'au moins une attaque acide par une solution aqueuse d'un acide minéral ou organique. Les conditions de calcination en présence de vapeur d'eau (température, pression de vapeur d'eau et durée du traitement) ainsi que les conditions d'attaque acide post-calcination (durée de l'attaque, concentration de l'acide, nature de l'acide utilisé et le rapport entre le volume d'acide et la masse de zéolithe), sont adaptées de manière à obtenir le niveau de désalumination souhaité. Dans le même but on peut aussi jouer sur le nombre de cycles traitement thermique-attaque acide qui sont effectués.

Dans le cas préféré où T est Al, le cycle de désalumination de la charpente, comportant au moins une étape de traitement thermique réalisé, éventuellement et de préférence, en présence de vapeur d'eau et au moins une étape d'attaque en milieu acide de la zéolithe IM-5, peut être répété autant de fois qu'il est nécessaire pour obtenir la zéolithe IM-5 désaluminée possédant les caractéristiques désirées. De même, suite au traitement thermique réalisé, éventuellement et de préférence en présence de vapeur d'eau, plusieurs attaques acides successives, avec des solutions en acide de concentrations différentes, peuvent être opérées.

Une variante de cette deuxième méthode de calcination peut consister à réaliser le traitement thermique de la zéolithe IM-5 contenant le structurant organique, à une température généralement comprise entre 550 et 850°C, éventuellement et de préférence en présence de vapeur d'eau. Dans ce cas les étapes de calcination du structurant organique et de désalumination de la charpente sont réalisées simultanément. Puis, la zéolithe est éventuellement traitée par au moins une solution aqueuse d'un acide minéral (par exemple de HNO₃ ou de HCI) ou organique (CH₃CO₂H par exemple). Enfin, le solide ainsi obtenu peut être éventuellement soumis à au moins un échange ionique par au moins une solution NH₄NO₃, de manière à éliminer pratiquement tout cation alcalin, en particulier le sodium, présent en position cationique dans la zéolithe.

De manière à caractériser l'aptitude des zéolithes, comprises dans les catalyseurs utilisés dans le procédé de craquage catalytique selon l'invention, à produire des oléfines courtes à 3 et 4 atomes de carbone, le demandeur a mis au point un test de craquage catalytique spécifique. Ce test, qui met oeuvre le craquage catalytique du méthylcyclohexane, permet de réaliser une mesure du transfert d'hydrogène qui caractérise l'aptitude des zéolithes et en particulier des zéolithes IM-5 selon l'invention mais aussi de façon plus générale de l'ensemble des tamis moléculaires à produire ou ne pas produire des oléfines.
Ce test opère le craquage catalytique du méthylcyclohexane en lit fixe sur zéolithes à une température de 500°C et à pression atmosphérique. Le débit de méthylcyclohexane et la masse de tamis moléculaires sont réglés de telle manière à ce que une large gamme de conversion soit couverte.

Le demandeur a découvert que la mesure du rapport molaire iC₄/iC₄⁼ est un excellent indice de l'aptitude d'une zéolithe à produire des oléfines. Cet indice, appelé indice de transfert d'hydrogène (ITH), caractérise les réactions de transfert d'hydrogène qui sont des réactions parasites ayant pour résultat de saturer les oléfines produites par craquage. Par conséquent, cet indice sera d'autant plus faible qu'une zéolithe fera peu de transfert d'hydrogène et produira donc beaucoup d'oléfines courtes. En général, la mesure du rapport molaire iC₄/iC₄⁼, c'est à dire de l'ITH est réalisée pour une conversion du méthylcyclohexane de 40%, la valeur ainsi obtenue est appelée indice de transfert d'hydrogène à 40% de conversion du méthylcyclohexane et est désignée par le sigle ITH₄₀. Il est aussi possible de déterminer un indice de transfert d'hydrogène (ITH) à des conversions plus faibles ou plus élevées, l'important étant de comparer les diverses valeurs obtenues à une même conversion du méthylcyclohexane.

A titre d'exemples non limitatifs les valeurs de l'indice ITH₄₀ de quelques zéolithes non comprises dans les catalyseurs utilisés selon les procédés selon l'invention sont répertoriées dans le tableau 3 ci-après

**Tableau 3**

| | |
|---|---|
| **Type Structural (zéolithe)** | **ITH**_{**40**} |
| FAU (Y Si/Al=19) | 6,4 |
| MAZZ (Oméga Si/Al=17) | 5,7 |
| MOR (Mordénite Si/Al=18) | 3,6 |
| NU-87 (Si/Al=17,5) | 2,4 |

Ce tableau montre d'une part que l'ITH dépend fortement de la structure de la zéolithe et d'autre part que la zéolithe Y conduit à un fort indice de transfert d'hydrogène.

Le catalyseur utilisé selon le procédé de la présente invention renferme également une zéolithe Y de structure faujasite (Zeolite Molecular Sieves Structure, chemistry and uses, D.W.BRECH, J. WILLEY and Sons 1973), ainsi qu'il est connu de l'homme du métier. Parmi les zéolithes Y que l'on peut utiliser, on emploiera de préférence une zéolithe Y stabilisée, couramment appelée ultrastable ou USY, soit sous forme au moins partiellement échangée avec des cations métalliques, par exemple des cations des métaux alcalino-terreux et/ou des cations de métaux de terres rares de numéro atomique 57 à 71 inclus, soit sous forme hydrogène.

Le catalyseur utilisé selon le procédé de la présente invention renferme également au moins une matrice habituellement amorphe ou mal cristallisée choisie généralement dans le groupe formé par l'alumine, la silice, la magnésie, l'argile, l'oxyde de titane, la zircone, et l'oxyde de bore.

Le catalyseur utilisé selon le procédé de la présente invention renferme généralement :
a) de 20 à 95%, de préférence de 30 à 85% et de manière encore plus préférée de 50 80% en poids d'au moins une matrice,
b) de 1 à 60%, de préférence de 4 à 50% et de manière encore plus préférée dfe 10 à 40% en poids d'au moins une zéolithe Y de structure faujasite, et
c) de 0, 01 à 30%, de préférence de 0,05 à 20% et de manière encore plus préférée de 0,1 à 10% en poids d'au moins une zéolithe IM-5, éventuellement désaluminée et au moins en partie sous forme acide.

Le catalyseur utilisé selon le procédé de la présente invention peut être préparé par toutes les méthodes bien connues de l'homme du métier.

Ainsi ledit catalyseur peut être obtenu par incorporation simultanée de la zéolithe IM-5 décrite ci-avant et de la zéolithe Y selon les méthodes classiques de préparation des catalyseurs de craquage contenant une zéolithe.

Ledit catalyseur peut être également obtenu par mélange mécanique d'un premier produit contenant une matrice et une zéolithe Y, et d'un second produit comprenant ladite zéolithe IM-5 avec une matrice qui peut être identique ou différente de celle contenue dans ledit premier produit. Ce mélange mécanique est habituellement effectué avec des produits séchés. Le séchage des produits est de préférence effectué par atomisation (Spray-drying), par exemple à une température de 100 à 500°C, habituellement durant 0,1 à 30 secondes. Après séchage par atomisation, ces produits peuvent encore contenir environ 1 à 30% en poids de matière volatile (eau et ammoniac).

Le mélange zéolithe IM-5 -matrice contient habituellement de 1 à 90% en poids et, de préférence, de 5 à 60% en poids de zéolithe IM-5 par rapport au poids total dudit mélange.

Le mélange zéolithe Y-matrice employé dans la préparation du catalyseur utilisé selon le procédé de la présente invention est habituellement un catalyseur classique de craquage de l'art antérieur (par exemple un catalyseur du commerce) ; la zéolithe IM-5 décrite ci-dessus peut alors être considérée comme un additif qui peut être employé tel que, en vue de son mélange avec le catalyseur classique de craquage défini ci-avant, ou être préalablement incorporé à une matrice, l'ensemble matrice-zéolithe IM-5 constituant alors l'additif que l'on mélange au catalyseur classique de craquage défini ci-avant, après une mise en forme adéquate, par exemple par mélange mécanique des grains contenant ladite zéolithe IM-5 et des grains de catalyseur classique de craquage.

Ainsi, dans une première mise en oeuvre du procédé selon l'invention, le catalyseur de craquage comprend un additif FCC qui est la zéolithe IM-5 mise en forme sur une matrice et un catalyseur d'hydrocraquage dit conventionnel comportant une zéolithe Y de structure faujasite et une matrice. Dans une seconde mise en oeuvre du procédé selon l'invention, le catalyseur de craquage comprend la zéolithe IM-5 et la zéolithe Y mises en forme dans la même matrice.

Les conditions générales des réactions de craquage catalytique sont bien connues de l'homme du métier (voir par exemple les brevets US-A-3 293 192, US-A-3 449 070, US-A-4 415 438, US-A-3 518 051 et US-A-3 607 043).

Dans le but de produire la plus grande quantité possible d'hydrocarbures gazeux à trois et/ou quatre atomes de carbone par molécule, et notamment de propylène et de butènes, il est parfois avantageux d'augmenter légèrement la température à laquelle on effectue le craquage, par exemple de 10 à 50°C. Le catalyseur utilisé selon le procédé de la présente invention est cependant dans la majorité des cas suffisamment actif pour qu'une telle augmentation de température ne soit pas nécessaire. Les autres conditions de craquage sont inchangées par rapport à celles employées dans l'art antérieur. Les conditions de craquage catalytique sont habituellement les suivantes :
- temps de contact compris entre 1 et 10 000 millisecondes
- rapport pondéral catalyseur sur charge (C/O) compris entre 0,5 et 50
- température comprise entre 400 et 800°C
- pression comprise entre 0,5 et 10 bar (1 bar = 0,1 MPa).

Les exemples suivants illustrent la présente invention sans toutefois en limiter la portée.

### Exemple 1 : Préparation de la zéolithe H-IM-5/1 selon l'invention

La matière première utilisée est une zéolithe IM-5, qui possède un rapport atomique Si/Al global égal à 11,1, une teneur pondérale en sodium correspondant à un rapport atomique Na/AI égal à 0,031. Cette zéolithe IM-5 a été synthétisée d'après la demande de brevet français 96/12.873 du 21/10/96.

Cette zéolithe IM-5 subit tout d'abord une calcination dite sèche à 550°C sous flux d'air sec durant 6 heures. Puis le solide obtenu est soumis à deux échanges ioniques dans une solution de NH₄NO₃ 10N, à environ 100°C pendant 4 heures pour chaque échange. Le solide ainsi obtenu est référencé H-IM-5 et posséde un rapport Si/Al = 11,1 et un rapport Na/Al=0,0015.

### Exemple 2 : Préparation du catalyseur C1 conforme à l'invention

La zéolithe H-IM-5/1 obtenue à l'exemple 1 est ensuite utilisée pour préparer un additif de craquage par mélange mécanique de façon classique à raison de 30% en poids de zéolithe H-IM-5/1 forme hydrogène sèche et de 70% en poids de silice amorphe, préalablement calcinée et de granulométrie comparable à celle de la zéolithe H-IM-5/1 forme hydrogène.

L'additif ainsi obtenu est pastillé, puis réduit en petits agrégats à l'aide d'une machine à concasser. La fraction des grains de taille comprise en 40 µm et 200 µm est ensuite recueillie par tamisage. Cet additif est appelé A1 et contient donc 30% en poids de zéolithe H-IM-5/1.
Cet additif subit ensuite un traitement hydrothermique à 750°C durant 4 heures en présence de 100% de vapeur d'eau. L'additif A1 ainsi obtenu est mélangé mécaniquement avec un catalyseur CAT qui contient une matrice slice-alumine et 30% en poids d'une zéolithe Y ultrastabilisée (USY) de paramètre cristallin de 24,26 Å, ce qui conduit à l'obtention du catalyseur C1.

### Exemple 3 : Préparation de la zéolithe H-IM-5/2 conforme à l'invention

La matière première utilisée est la même zéolithe IM-5 que celle utilisée dans l'exemple 1. Cette zéolithe IM-5 subit, tout d'abord, une calcination dite sèche à 550°C sous flux d'air et d'azote durant 6 heures. Puis, le solide obtenu est soumis à un échange ionique dans une solution de NH₄NO₃ 10N, à environ 100°C pendant 4 heures. La zéolithe IM-5 est alors soumise à un traitement par une solution d'acide nitrique 4N, à environ 100°C, pendant 5 heures. Le volume V de la solution d'acide nitrique engagé (en ml) est égal à 10 fois le poids P de zéolithe IM-5 sèche (V/P=10). Ce traitement par une solution d'acide nitrique 6N est réalisé une seconde fois dans les mêmes conditions opératoires.

A l'issue de ces traitements, la zéolithe obtenue est référencée H-IM-5/2. Elle se trouve sous sa forme H et possède un rapport SUAI atomique global égal à 31,5 et un rapport Na/AI inférieur à 0,001.

### Exemple 4 : Préparation du catalyseur C2 conforme à l'invention

La zéolithe H-IM-5/2 obtenue à l'exemple 3 est ensuite utilisée pour préparer un catalyseur un additif A2 et un catalyseur C2 selon le même mode opératoire que celui décrit exemple 2.

### Exemple 5 : Préparation de la zéolithe H-IM-5/3 conforme à l'invention

La zéolithe IM-5 utilisée dans cet exemple est la zéolithe NH4-IM-5 préparée dans l'exemple 1 de la présente invention. La zéolithe NH4-IM-5 est alors soumise à un traitement hydrothermique, en présence de 100% de vapeur d'eau à 650°C, durant 4 heures. La zéolithe subit alors une attaque acide, à l'aide d'acide nitrique 6N, à environ 100°C, pendant 4 heures, de manière à extraire les espèces aluminiques extra-réseau formées lors du traitement hydrothermique. Le volume V de la solution d'acide nitrique engagé (en ml) est égal à 10 fois le poids P de zéolithe IM-5 sèche (V/P=10).

A l'issue de ces traitements, la zéolithe H-IM-5/1 sous forme H posséde un rapport Si/Al atomique global égal à 28,2 et un rapport Na/Al inférieur à 0,001.

### Exemple 6 : Préparation du catalyseur C3 conforme à l'invention

La zéolithe H-IM-5/3 obtenue à l'exemple 5 est ensuite utilisée pour préparer un additif A3 et un catalyseur C3 selon le même mode opératoire que celui décrit exemple 2.

### Exemple 7 : Evaluation de l'indice de transfert d'hydrogène des additifs A1, A2 et A3 conformes à l'invention

Les évaluations catalytiques des additifs sont réalisées en lit fixe, sous pression atmosphérique à une température de 500°C. La charge utilisée est du méthylcyclohexane. Le méthylcyclohexane est introduit dans le réacteur dilué par de l'azote à raison d'un rapport molaire H2/HC=12 et à un débit tel que la conversion soit égale à 40% en poids de conversion.

Les valeurs des indices de transfert d'hydrogène obtenus pour les additifs A1, A2 et A3 conformes sont regroupés dans le tableau 4 ci-après:

**Tableau 4**

| **Additifs** | **ITH**_{**40**} |
|---|---|
| A1 | 0,90 |
| A2 | 0,70 |
| A3 | 0,65 |

Les valeurs obtenues mettent en évidence que les traitements de désalumination réalisés sur les zéolithes IM-5 conduisent à des solides qui produisent moins de réaction de transfert d'hydrogène par rapport à la zéolithe non désaluminée.

### Exemple 8 : Evaluation des propriétés catalytiques en craquage d'une charge réelle sur unité MAT, des catalyseurs C1, C2 et C3 conformes à l'invention

La réaction de craquage est réalisée en unité MAT sur une charge de type gazole sous vide dont les caractéristques sont données ci-après :

| | |
|---|---|
| Densité 60°C | 0,918 |
| Indice de réfraction à 67°C | 1,4936 |
| Point d'aniline °C | 76 |
| Soufre % pds | 2,7 |

La température de craquage employée est de 520°C. L'évaluation des propriétés catalytiques des catalyseurs C1 à C4 sont données dans le tableau 5 ci-après :

**Tableau 5 :**

| craquage d'un gazole sous vide sur les catalyseurs C1,C2,C3 | | | |
|---|---|---|---|
| | **C1** | **C2** | **C3** |
| C/O | 0,7 | 0,9 | 1,1 |
| Conversion % | 86 | 86 | 87 |
| Gaz C1-C4 % pds | 32,4 | 35,6 | 39,4 |
| Essence % pds | 42,2 | 39,7 | 37,2 |
| Gazole % pds | 8.,2 | 7,7 | 6,7 |
| Coke % pds | 2,5 | 2,2 | 2,9 |
| C3 = % pds | 7,4 | 7,8 | 9,1 |
| ΣC4= % pds | 9.,1 | 9,3 | 10,5 |

- Essence (% pds) :: Représente le pourcentage poids de composés liquides formés durant le test de craquage et dont les points d'ébullition sont compris entre 160 et 221° C.
- Gazole (% pds) :: Représente le pourcentage poids de composés liquides formés durant le test de craquage et dont les points d'ébullition sont compris entre 221 et 350° C.
- Coke (% pds) :: Représente le pourcentage poids de composés dont les points d'ébullition sont supérieurs à 350° C.
- C3⁼ (% pds) :: Représente le pourcentage poids d'oléfines à 3 atomes de carbone (propylène) formées durant le test de craquage.
- ΣC4⁼(% pds) :: Représente le pourcentage d'oléfines à 4 atomes de carbone formées durant le test de craquage.

Les catalyseurs C1,C2,C3 conformes à l'invention, à iso conversion ou iso coke, donnent des rendements en gaz d'autant plus important que l'ITH est faible . De plus les gaz produits avec les catalyseurs C1,C2,C3 sont aussi d'autant plus oléfiniques que l'ITH est faible. L'influence de l'ITH sur la production d'oléfines légères, lors du craquage d'une charge réelle, est donc particulièrement nette.

## Revendications

1. Procédé de craquage catalytique de charges hydrocarbonées **caractérisé par** l'utilisation d'un catalyseur de craquage comprenant au moins une zéolithe IM-5 au moins en partie sous forme acide et une zéolithe Y de structure faujasite.

2. Procédé selon la revendication 1 tel que ladite zéolithe IM-5 a été désaluminée.

3. Procédé selon la revendication 2 tel que ladite zéolithe comprend du silicium et au moins un élément T choisi dans le groupe formé par l'aluminium, le fer, le gallium et le bore, le rapport atomique global Si/T étant supérieur à 5.

4. Procédé selon l'une des revendications 2 ou 3 tel que le rapport atomique global Si/T de la zéolithe est supérieur à 10.

5. Procédé selon l'une des revendications 2 ou 3 tel que le rapport atomique global Si/T de la zéolithe est supérieur à 15.

6. Procédé selon l'une des revendications 2 à 5 tel que le rapport atomique global Si/T de la zéolithe est compris entre 20 et 400.

7. Procédé selon l'une des revendications 1 à 6 tel que ladite zéolithe est pratiquement totalement sous forme acide.

8. Procédé selon l'une des revendications 1 à 7 tel que ledit catalyseur renferme également au moins une matrice.

9. Procédé selon la revendication 8 tel que ladite matrice est choisie dans le groupe formé par l'alumine, la silice, la magnésie, l'argile, l'oxyde de titane, la zircone, et l'oxyde de bore.

10. Procédé selon l'une des revendications 1 à 9 tel que le catalyseur renferme:
a) de 20 à 95% en poids d'au moins une matrice,
b) de 1 à 60% en poids d'au moins une zéolithe Y de structure faujasite, et
c) de 0, 01 à 30% en poids d'au moins une zéolithe IM-5, éventuellement désaluminée et au moins en partie sous forme acide.

11. Procédé selon l'une des revendications 1 à 10 tel que le catalyseur de craquage comprend un additif FCC qui est la zéolithe IM-5 mise en forme sur une matrice et la zéolithe Y de structure faujasite et une matrice.

12. Procédé selon l'une des revendications 1 à 10 tel que le catalyseur de craquage comprend la zéolithe IM-5 et la zéolithe Y mises en forme sur la même matrice.

## Patentansprüche

1. Verfahren zum katalytischen Cracken von kohlenwasserstoffhaltigen Chargen, **gekennzeichnet durch** die Verwendung eines Crack-Katalysators, der wenigstens einen IM-5 Zeolith, der wenigstens zum Teil in saurer Form vorliegt, und einen Y Zeolithen mit Faujasit-Struktur umfasst.

2. Verfahren nach Anspruch 1, derart, dass der IM-5 Zeolith desaluminiert ist.

3. Verfahren nach Anspnich 2, derart, dass der Zeolith Silizium und wenigstens ein Element T umfasst, das aus der Gruppe gewählt ist, die gebildet wird durch Aluminium, Eisen, Gallium und Bor, wobei das Gesamtatomverhältnis Si/T größer als 5 ist.

4. Verfahren nach einem der Ansprüche 2 oder 3, derart, dass das Gesamtatomverhältnis Si/T des Zeolithen über 10 ist.

5. Verfahren nach einem der Ansprüche 2 oder 3, derart, dass das Gesamtatomverhältnis Si/T des Zeolithen größer als 15 ist.

6. Verfahren nach einem der Ansprüche 2 bis 5, derart, dass das Gesamtatomverhältnis Si/T des Zeolithen zwischen 20 und 400 liegt.

7. Verfahren nach einem der Ansprüche 1 bis 6, derart, dass der Zeolith praktisch vollständig in saurer Form vorliegt.

8. Verfahren nach einem der Ansprüche 1 bis 7, derart, dass der Katalysator gleichermaßen wenigstens eine Matrix einschließt.

9. Verfahren nach Anspruch 8, derart, dass die Matrix aus der Gruppe gewählt ist, die gebildet wird durch Aluminiumoxyd, Siliziumoxyd, Magnesiumoxyd, Ton, Titanoxyd, Zirkoniumoxyd und Boroxyd.

10. Verfahren nach einem der Ansprüche 1 bis 9, derart, dass der Katalysator einschließt:
a) 20 bis 95 Gew.-% wenigstens einer Matrix,
b) 1 bis 60 Gew.-% wenigstens eines Y Zeolithen mit Faujasit-Struktur und
c) 0,01 bis 30 Gew.-% wenigstens eines IM-5 Zeolithen, der gegebenenfalls desaluminiert und wenigstens zum Teil in saurer Form vorliegt.

11. Verfahren nach einem der Ansprüche 1 bis 10, derart, dass der CrackKatalysator einen FCC-Zusatz umfasst, der der IM-5 Zeolith geformt auf einer Matrix und der Y Zeolith mit Faujasit-Struktur und eine Matrix ist.

12. Verfahren nach einem der Ansprüche 1 bis 10, derart, dass der CrackKatalysator den IM-5 Zeolithen und den Y Zeolithen, geformt auf der gleichen Matrix, umfasst.

## Claims

1. A process for catalytic cracking of hydrocarbon feeds, **characterized by** the use of a cracking catalyst comprising at least one IM-5 zeolite which is at least partially in its acid form and a Y zeolite having a faujasite structure.

2. A process according to claim 1, in which said IM-5 zeolite has been dealuminated.

3. A process according to claim 2, in which said zeolite comprises silicon and at least one element T selected from the group formed by aluminium, iron, gallium and boron, the global Si/T atomic ratio being more than 5.

4. A process according to claim 2 or claim 3, in which the global Si/T atomic ratio of the zeolite is more than 10.

5. A process according to claim 2 or claim 3, in which the global Si/T atomic ratio of the zeolite is more than 15.

6. A process according to any one of claims 2 to 5, in which the global Si/T atomic ratio of the zeolite is in the range 20 to 400.

7. A process according to any one of claims 1 to 6, in which said zeolite is practically completely in its acid form.

8. A process according to any one of claims 1 to 7, in which said catalyst also comprises at least one matrix.

9. A process according to claim 8, in which said matrix is selected from the group formed by alumina, silica, magnesia, clay, titanium oxide, zirconia and boron oxide.

10. A process according to any one of claims 1 to 9 in which the. catalyst comprises:
a) 20% to 95% by weight of at least one matrix;
b) 1% to 60% by weight of at least one Y zeolite with a faujasite structure; and
c) 0.01% to 30% by weight of at least one IM-5 zeolite which has optionally been dealuminated and is at least partially in its acid form.

11. A process according to any one of claims 1 to 10, in which the cracking catalyst comprises an FCC additive which is IM-5 zeolite formed on a matrix, a Y zeolite with a faujasite structure, and a matrix.

12. A process according to any one of claims 1 to 10, in which the cracking catalyst comprises IM-5 zeolite and Y zeolite, formed in the same matrix.
